# FASCICULE DE BREVET EUROPEEN

(11) **EP 3 686 134 B1**
(45) Date de publication et mention de la délivrance du brevet: **19.05.2021**
(21) Numéro de dépôt: 20152875.9
(22) Date de dépôt: 21.01.2020
(51) Int. Cl.: B65G 43/08, B07C 1/04, B07C 1/06, B07C 3/08, B65G 47/26, B65G 47/29, B65G 47/31, B65G 47/51, B65G 47/70, B65G 47/84, B65G 47/88

(54) **SYSTEME DE TRI/MANUTENTION DE PAQUETS A CONVOYEUR A PLATEAUX ET UNITE DE TRANSFERT PAR GRAVITE**
SORTIER-/FÖRDERSYSTEM VON PAKETEN MIT EINEM PLATTENFÖRDERER UND EINER SCHWERKRAFT-TRANSFEREINHEIT
SYSTEM FOR PACKAGE SORTING/HANDLING WITH TRAY CONVEYOR AND UNIT FOR TRANSFERRING BY GRAVITY

(30) Priorité: 24.01.2019 FR 1900618
(43) Date de publication de la demande: 29.07.2020
(73) Titulaire: Solystic, 92220 Bagneux (FR)
(72) Inventeur: CZUKOR, Christophe, 26120 CHABEUIL (FR); RIEU, Jean, 07800 SAINT GEORGES LES BAINS (FR); BEAUGRAND, Wilfrid, 26000 VALENCE (FR)
(74) Mandataire: Prugneau, Philippe

(56) Documents cités:
- WO-A1-2010/085141
- WO-A1-2016/067163
- CN-U- 207 756 503
- FR-A1- 2 266 647
- NL-C- 31 557
- US-A- 1 741 752
- US-A- 4 709 529

## Description

### Domaine technique

Le domaine de l'invention est celui des systèmes de tri/manutention de colis ou paquets, et plus particulièrement des "PPI" ou "Petits Paquets Import" qui peuvent être distribués directement par un livreur d'un opérateur logistique ou encore un facteur. Les documents de brevet US-1741752, NL-31557 et CN-207756503 divulguent des exemples de systèmes de manipulation de paquets ou autres objets.

Les colis ou paquets sont des objets qui sont conditionnés en général dans un emballage en papier, ou en carton, ou en plastique et qui sont destinés à être livrés à l'adresse d'un destinataire qui est apposée sur cet emballage.

Dans le domaine du commerce électronique international appelé encore "e-commerce", les PPI sont considérés comme des petites marchandises de faible valeur.

Ils sont triés et acheminés en quelques jours ce qui amène à concevoir des centres logistiques de tri à grande échelle capables de trier de l'ordre de centaines de milliers de paquets par jour sur plusieurs milliers de destinations différentes.

Actuellement le tri de ces paquets doit se dérouler en plusieurs passes de tri sur plusieurs machines de tri paquets avec entre deux passes de tri sur une machine, une manutention des paquets mis en conteneurs dans les sorties de tri pour les injecter de nouveau en vrac en entrée d'une machine avant la deuxième passe de tri, ce qui oblige à répéter la tâche complexe de séparation des paquets, difficile et coûteuse à automatiser et génératrice de pertes de débit à cause de problèmes tels que des bourrages, des rejets et des erreurs de tri.

Avec de telles processus de tri des paquets, on est donc obligé de traiter et stocker les paquets dans des conteneurs qu'il faut manipuler d'une sortie de la machine vers l'entrée de celle-ci (ou d'une autre) ce qui prend du temps et occasionne des opérations manuelles fastidieuses de déplacement de conteneurs multiples.

En outre ces machines connues sont complexes à faire fonctionner de façon automatique lorsque les flux de paquets sont très importants notamment en période de fête, ce qui engendre des coûts d'exploitation pour les Opérateurs logistiques qui sont également très importants y compris pour la main d'œuvre.

Par ailleurs, les conteneurs doivent être entreposés, y compris à vide, dans des zones de stockage qui s'ajoutent à l'emprise au sol de la machine.

Enfin, ces machines de tri des paquets présentent un taux d'occupation qui est assez bas du fait des temps nécessaires au transbordement des paquets entre les sorties et l'entrée de la machine.

Le but de l'invention est de proposer un système de tri/manutention de colis ou paquets, en particulier des paquets dits "PPI" qui ne présente pas ces inconvénients.

### Résumé de l'invention

A cet effet, l'invention a pour objet un système de tri/manutention de colis ou paquets, caractérisé en ce qu'il comprend :
- un convoyeur primaire apte à convoyer en série des paquets suivant un trajet en boucle,
- au moins un convoyeur secondaire alimenté en paquets par le convoyeur primaire, le convoyeur secondaire étant un convoyeur à plateaux apte à déplacer les paquets placés sur les plateaux en direction de sorties de tri, ce convoyeur secondaire ayant un débit inférieur à celui du convoyeur primaire et étant asynchrone du convoyeur primaire,
- une unité de transfert des paquets entre le convoyeur primaire et le convoyeur secondaire comprenant au moins une trémie dans laquelle les paquets amenés par le convoyeur primaire tombent par gravité pour être réceptionnés en sortie sur au moins une voie d'une zone d'accumulation qui s'étend suivant une direction longitudinale le long du convoyeur secondaire, des barrières mobiles étant disposées sur ladite au moins une voie de la zone d'accumulation en amont d'une zone d'alignement où des éléments mécaniques sérialisent les paquets avec un pas constant sur une voie de référence et les poussent chacun transversalement à ladite direction longitudinale sur un plateau libre du convoyeur secondaire,
- et une unité de contrôle/commande apte à descendre les barrières mobiles pour laisser des paquets descendant de la au moins une trémie s'accumuler temporairement dans la zone d'accumulation et à lever les barrières mobiles pour libérer selon une certaine séquence ces paquets de la zone d'accumulation et commander les éléments mécaniques de telle façon à réaliser le transfert des paquets en alignement sur la voie de référence sur des plateaux libres du convoyeur secondaire à raison d'un paquet par plateau.

Le système de tri/manutention selon l'invention peut présenter les particularités suivantes :
- ladite zone d'accumulation à barrières peut comprendre au moins deux trémies associées respectivement à deux voies parallèles et sur chaque voie une rangée de barrières mobiles pour bloquer une série de paquets séparés un à un par une barrière mobile.
- les plateaux dudit convoyeur secondaire peuvent suivre un trajet en boucle et il peut être prévu en bout du dispositif d'injection un conteneur pour récupérer les paquets n'ayant pas pu être transférés sur un plateau libre du second convoyeur.
- ladite zone d'accumulation et ladite zone d'alignement sont constituées par un convoyeur unique à billes sous lequel sont disposés deux tapis motorisés qui se déplacent perpendiculairement l'un par rapport à l'autre.
- des détecteurs de niveau peuvent être prévus pour détecter la hauteur de chaque paquet arrivant dans la zone d'accumulation et fournir un signal correspondant à ladite unité et ladite unité peut être agencée de telle manière à baisser ou lever chaque barrière destinée à bloquer un certain paquet dans la zone d'accumulation de façon adaptative à la hauteur détectée de ce paquet.
- un équipement de détection optique, telle qu'une caméra située au-dessus de la zone d'accumulation ou encore des cellules photoélectriques situées en amont et en aval de chaque barrière mobile, peut être prévu pour fournir à l'unité de contrôle/commande un signal de détection de la position relative des paquets par rapport aux barrières de sorte à commander de façon optimale l'ouverture et la fermeture des barrières.
- chaque barrière peut être équipée d'un moyen amortisseur limitant les chocs lors du contact physique entre un paquet et la barrière. Ce moyen amortisseur peut être une garniture en un matériau amortisseur qui limite le rebond et évite l'endommagement des paquets. La surface de contact des barrières peut être à faible coefficient de frottement pour éviter le soulèvement des paquets.

Un exemple de système de tri/manutention selon l'invention est illustré par les dessins.

### Présentation sommaire des dessins

La figure 1 illustre de façon très schématique le système de tri/manutention selon l'invention avec ici à titre d'exemple deux voies d'accumulation en parallèle et deux rangées d'accumulation par voie.
La figure 2 illustre le processus d'accumulation de paquets dans le système de tri/manutention à l'aide des barrières mobiles.

### Description des modes de réalisation

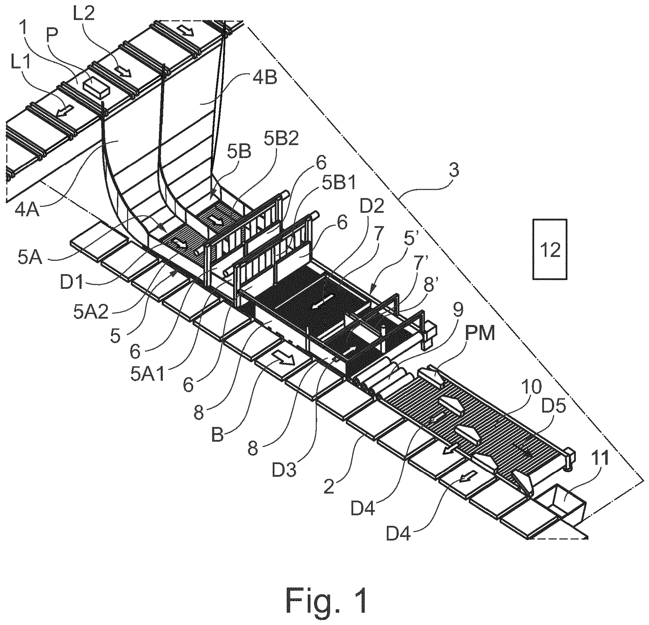

Sur la figure 1, on a représenté de façon très schématique en perspective un système de tri/manutention selon l'invention pour le tri de colis ou paquets et ici plus particulièrement des "Petits Paquets Imports" dits "PPI".

Ce système est destiné à équiper plus particulièrement un centre logistique de routage de paquets dans une solution d'équipements pour le e-commerce.

Le système comprend un convoyeur primaire 1 apte à convoyer en série les paquets P suivant un trajet en boucle (la boucle est partiellement représentée sur la figure 1) suivant la direction L1.

Ce convoyeur primaire 1 a par exemple un débit nominal de 13000 paquets par heure à vitesse constante. Il peut s'agir d'un convoyeur de tri à courroies haute cadence du type "cross-Belt" capable d'éjecter les paquets latéralement suivant la flèche L2.

Le système de tri/manutention comprend encore au moins un convoyeur secondaire 2 qui est ici un convoyeur à plateaux ayant un débit nominal inférieur à celui du convoyeur primaire, par exemple 6500 paquets/heure à vitesse constante. La vitesse du convoyeur secondaire est de par exemple 1 à 1,7 m/s.

La figure 1 illustre un seul convoyeur à plateaux 2 mais le système de tri/manutention selon l'invention peut comporter plusieurs convoyeurs 2 alimentés en parallèle par le convoyeur primaire 1.

Le convoyeur à plateaux 2 est un convoyeur en boucle qui est apte à déplacer les paquets chargés sur les plateaux à raison d'un paquet par plateau en direction de sorties de tri non représentées sur la figure 1, la direction de déplacement des plateaux étant indiquée par la flèche B.

Le convoyeur 2 est alimenté en paquets par le convoyeur primaire 1 à travers une unité de transfert de paquets indiquée par la référence 3.

L'unité de transfert 3 comprend ici une double trémie 4A et 4B (deux trémies) dans laquelle les paquets P du convoyeur primaire 1 tombent par gravité. Les deux trémies 4A,4B sont profilées avec des parois latérales et des fonds homogènes de telle sorte à faire chuter de façon identique les paquets du niveau du convoyeur 1 au niveau du convoyeur 2 tout en les réceptionnant en sortie sur deux voies parallèles 5A,5B d'une zone d'accumulation 5 qui s'étend suivant la direction longitudinale B le long du convoyeur secondaire 2. Les deux trémies 4A,4B sont associées respectivement aux deux voies parallèles 5A,5B. L'invention s'étend à un agencement avec n trémies associées respectivement à n voies parallèles dans la zone d'accumulation avec n supérieur à 2.

La zone d'accumulation 5 est constituée ici par la sole d'un convoyeur à billes dont le tapis est déplacé en permanence à vitesse constante suivant la direction D1 qui correspond ici à la direction B.

Des barrières mobiles 6 sont disposées sur les deux voies 5A,5B de la zone d'accumulation 5 ici en deux rangées sur chaque voie 5A1,5A2 d'une part et 5B1,5B2 d'autre part mais on peut avoir plus de deux rangées de barrière mobiles dans la zone d'accumulation s'il est nécessaire de disposer d'une capacité d'accumulation supérieure, par exemple dans le cas où l'écart de débit entre les deux convoyeurs 1 et 2 est plus important, ou si le taux d'occupation des plateaux du convoyeur 2 est élevé.

Les barrières mobiles 6 sont disposées en rangées à pas constant le long de chaque voie 5A,5B. Elles sont utilisées pour retenir temporairement les paquets provenant du convoyeur 1 avant de les transférer sur le convoyeur 2 en synchronisme avec les plateaux libres.

Chaque barrière 6 est ici mobile en hauteur comme illustrée sur la figure 1 à savoir qu'elle est capable d'occuper une position basse où elle vient bloquer frontalement un paquet (même de faible épaisseur) qui patine alors sur les billes du convoyeur à billes, ou une position haute où elle laisse passer un paquet (même de grande épaisseur) entraîné par les billes du convoyeur à billes, ou encore une position intermédiaire entre la position basse et la position haute. Sur la figure 1, toutes les barrières sont en position basse.

L'unité de transfert 3 comprend encore en aval de la zone d'accumulation 5, une zone d'alignement 5' avec des éléments mécaniques qui sont conçus pour sérialiser les paquets avec un pas constant sur une seule voie de référence par exemple la voie 5A.

Ces moyens mécaniques peuvent comprendre ici le même convoyeur à billes que pour la zone d'accumulation mais dans la zone d'alignement, le tapis motorisé 7 se déplace suivant la direction D2 qui est perpendiculaire à la direction D1 de déplacement du tapis dans la zone d'accumulation. Ceci a pour effet de dévier et rassembler tous les paquets venant des voies 5A et 5B en sortie de la zone d'accumulation sur la voie 5A et les mettre en alignement sur une seule file contre le bord extérieur de cette voie 5A formé par exemple par une courroie sur chant motorisée formant une rive de taquage active 8.

Un autre tapis motorisé 7' est prévu en aval du tapis 7 mais ce tapis 7' se déplace selon une direction D3 qui est en sens inverse de D2 pour amener l'alignement des paquets sur le bord intérieur de la voie 5A où une rive active 8' à courroie sur chant est encore prévue.

Par conséquent, en agissant sur l'ouverture et la fermeture des barrières 6, les paquets P accumulés dans les multiples voies telles que 5A,5B de la zone d'accumulation 5 sont sérialisés à pas constant et en alignement mutuel sur une seule file dans la zone d'alignement en attente d'être transférés.

En aval du tapis 7', l'unité de transfert 3 peut comprendre un système accélérateur-décélérateur 9 comprenant ici à quatre tapis parallèles, motorisés indépendants à vitesse variable, capables de régler encore plus précisément le centrage à pas constant des paquets en alignement avant leur transfert sur les plateaux du convoyeur 2.

En aval du système 9, l'unité de transfert 3 comprend un injecteur ici à titre d'exemple avec des pousseurs mécaniques à chariots PM coulissants suivant la direction D4 parallèle à D2. Ces chariots sont montés coulissants suivant la direction D4 sur un tapis de transport à lattes 10 qui se déplace suivant la direction D5 parallèle à la direction B. Par le déplacement combiné des chariots PM suivant les directions D4 et D5, les paquets sont poussés chacun sur un plateau libre du convoyeur secondaire 2 à raison d'un paquet par plateau.

A l'extrémité du convoyeur à lattes 10, il peut être prévu avantageusement une trémie avec un conteneur de rejet 11 pour recevoir les paquets qui ne peuvent pas être transférés sur les plateaux du convoyeur 2.

Enfin, le système de tri/manutention de colis ou paquets selon l'invention comprend ici une unité de contrôle/commande indiquée sur la figure 1 par le référence 12, qui commande l'ouverture et la fermeture des barrières mobiles 6 et qui pilote aussi l'accélérateur-décérélateur 9 en conséquence pour régler le pas entre deux paquets adjacents et asservit la position des pousseurs à chariots PM à celle des plateaux du convoyeur 2 pour réaliser le transfert à raison d'un paquet par plateau.

Pour cela, l'unité 12 tient en temps réel en mémoire la liste des paquets présents sur le convoyeur 1, suit le défilement des plateaux libres du convoyeur 2 arrivant en face des pousseurs à chariots PM et commande le déplacement des pousseurs à chariots PM pour le cas échéant diriger un paquet en rejet de transfert vers le réceptacle 11.

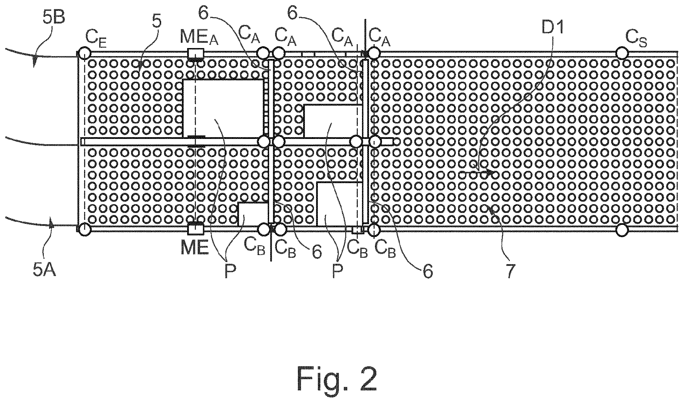

Sur la figure 2, on a illustré très schématiquement la zone d'accumulation avec deux rangées de deux barrières mobiles sur les voies 5A et 5B.

Sur cette figure, on a fait apparaître des capteurs de mesure d'épaisseur MEA et MEB qui sont aptes à délivrer un signal de hauteur du paquet à l'unité 12 et des détecteurs de passage CA et CB placés dans la zone d'accumulation qui détectent le passage d'un paquet à travers une barrière. On a illustré aussi sur cette figure les billes (petits losanges) du convoyeur à billes.

Les capteurs et détecteurs ME et CA peuvent être classiques en soi mais ils peuvent aussi être réalisés par analyse d'image via une caméra implantée au-dessus de la zone d'accumulation.

Chaque barrière mobile a la forme générale d'un portique dans lequel glisse une porte qui s'élève ou s'abaisse. La porte présente une zone plane verticale d'une hauteur au moins égale à l'épaisseur maximale admise pour un paquet dans le système et une largeur au moins égale à la longueur maximale admise pour un paquet dans le système. Par exemple, chaque barrière peut faire environ 250 mm de hauteur et 600 mm de largeur. La porte peut être entraînée en déplacement vertical par deux courroies crantées motorisées par un même moto-variateur qui est choisi pour lever la porte de par exemple 300 mm (hauteur maximale d'un PPI) en 150 ms et la baisser à moins de 2mm (inférieur à l'épaisseur minimal d'un PPI) de la sole du convoyeur à billes en moins de 100 ms.

La porte de la barrière est avantageusement munie d'un moyen amortisseur qui peut être par exemple une garniture en un matériau amortisseur comme une mousse pour amortir l'impact des paquets contre la barrière. Le matériau directement en contact avec les paquets sera choisi à faible coefficient de frottement pour éviter un soulèvement du paquet par contact du front avant du paquet contre la surface de la porte de la barrière lors de la remontée de la porte de la barrière.

Le principe du remplissage de la zone d'accumulation est le suivant :
- Tant qu'au moins un paquet P (plusieurs paquets de différentes dimensions sont illustrés sur la figure 2) se trouve dans l'accumulateur 5, les paquets sont insérés dans l'ordre A1, B1, A2, B2 (et A3, B3 s'il y a un troisième rang de barrière) sous la commande de l'unité 12.
- Une fois que l'accumulateur 5 est complètement rempli, aucun paquet supplémentaire n'est accepté et les paquets suivants sont mis en recirculation sur le convoyeur primaire 1 sous la commande de l'unité 12.
- Un paquet venant du convoyeur primaire 1 (Voie A ou B de la trémie) est systématiquement bloqué par la barrière 6 de l'accumulateur 5 qui est libre et la plus en aval suivant la direction D1.
- Dès qu'un paquet est bloqué par une barrière 6 dans l'accumulateur 5, la barrière 6 située derrière lui (s'il y en a une) est immédiatement fermée sous la commande de l'unité 12,

Le principe de vidage de la zone d'accumulation est le suivant :
- Les paquets P accumulés sont libérés dans l'ordre d'arrivée : A1, B1, A2, B2 (A3, B3 s'il y a un troisième rang).
- La libération d'un paquet se fait par ouverture de la barrière 6 sous trois conditions :
   a) Le paquet est le prochain à être libéré.
   b) La barrière est en position fermée et le paquet est stabilisé contre la porte de la barrière (détection de présence par un capteur CA).
   c) Un plateau du convoyeur secondaire 2 est disponible pour recevoir ce paquet.

L'ouverture de la barrière pour libérer un paquet est anticipée d'une durée paramétrable (100 à 500 ms) correspondant au retard de mise en vitesse et de la durée estimée d'ouverture de la barrière à l'épaisseur du paquet.

A chaque fois qu'un paquet est libéré, la barrière de tête est refermée juste derrière, la barrière suivante de la même voie est ouverte (si elle était fermée) après un délai égal à la durée de pleine ouverture (150 ms) suivant la commande d'ouverture de la barrière de tête, la barrière en aval de la même voie est refermée juste derrière l'entrée du prochain paquet dans l'accumulateur amont (que ce soit immédiatement ou plus tard).

L'unité de contrôle/commande 12 reçoit les signaux des capteurs ME et en réponse est apte à descendre et lever les barrières mobiles de façon adaptative à la hauteur détectée de chaque paquet bloqué par une barrière.

Avec ce dispositif de transfert selon l'invention, des paquets provenant d'un convoyeur 1 à haut débit sont transférés sur un ou plusieurs convoyeurs à plateaux 2 à plus bas débit.

Le mouvement des barrières est synchronisé par l'unité de contrôle/commande 12 au déplacement des plateaux vides du convoyeur secondaire 2.

On réduit la mise en recirculation des paquets sur le convoyeur principal 1 en ajustant la taille de l'accumulateur à barrières.

Dans le cadre de l'exemple décrit ci-dessus avec un rapport de 2 entre le débit du convoyeur 1 et le débit du convoyeur 2, on a trouvé qu'une zone d'accumulation a deux voies avec deux rangées de barrières étant bien adaptée.

Bien entendu, l'invention peut s'appliquer à d'autres types de colis ou paquets comme des objets postaux plats dits grand format.

Le système selon l'invention peut comporter plusieurs convoyeurs primaires 1 associés chacun à plusieurs convoyeurs secondaires 2 et avec plusieurs dispositifs de transfert multivoies (à plus de deux voies parallèles) pour augmenter encore plus les débits de traitement des colis ou paquets.

## Revendications

1. Système de tri/manutention de colis ou paquets (P), comprenant :
- un convoyeur primaire (1) apte à convoyer en série des paquets suivant un trajet en boucle,
- au moins un convoyeur secondaire (2) alimenté en paquets par le convoyeur primaire, le convoyeur secondaire étant un convoyeur à plateaux apte à déplacer les paquets placés sur les plateaux en direction de sorties de tri, ce convoyeur secondaire ayant un débit inférieur à celui du convoyeur primaire et étant asynchrone du convoyeur primaire,
- une unité de transfert (3) des paquets entre le convoyeur primaire et le convoyeur secondaire comprenant au moins une trémie (4A,4B) dans laquelle les paquets amenés par le convoyeur primaire tombent par gravité pour être réceptionnés en sortie sur au moins une voie (5A, 5B) d'une zone d'accumulation qui s'étend suivant une direction longitudinale le long du convoyeur secondaire, des barrières mobiles (6) étant disposées sur la au moins une voie de la zone d'accumulation en amont d'éléments mécaniques dans une zone d'alignement qui sérialisent les paquets avec un pas constant sur une voie de référence et les poussent chacun transversalement à ladite direction longitudinale sur un plateau libre du convoyeur secondaire,
- et une unité de contrôle/commande (12) apte à descendre les barrières mobiles pour laisser des paquets descendant de la au moins une trémie s'accumuler temporairement dans la zone d'accumulation et à lever les barrières mobiles pour libérer selon une certaine séquence ces paquets de la zone d'accumulation et commander les éléments mécaniques de telle façon à réaliser le transfert des paquets en alignement sur la voie de référence sur des plateaux libres du convoyeur secondaire à raison d'un paquet par plateau.

2. Système selon la revendication 1, **caractérisé en ce que** ladite zone d'accumulation à barrières comprend au moins deux trémies (4A,4B) associées respectivement à au moins deux voies parallèles (5A, 5B) et sur chaque voie une rangée de barrières mobiles pour bloquer une série de paquets séparés un à un par une barrière mobile.

3. Système selon la revendication 1, **caractérisé en ce que** les plateaux dudit convoyeur secondaire suivent un trajet en boucle et **en ce qu'**il est prévu en bout du dispositif de transfert un conteneur (11) pour récupérer les paquets n'ayant pas pu être transférés sur un plateau libre du convoyeur secondaire.

4. Système selon la revendication 1, **caractérisé en ce que** ladite zone d'accumulation et ladite zone d'alignement sont constituées par un convoyeur unique à billes sous lequel sont disposés deux tapis motorisés qui se déplacent perpendiculairement l'un par rapport à l'autre.

5. Système selon la déplacés revendication 1, **caractérisé en ce que** des détecteurs de niveau (ME) sont prévus pour détecter la hauteur de chaque paquet arrivant dans la zone d'accumulation et fournir un signal correspondant à ladite unité (12) et **en ce que** ladite unité est agencée de telle manière à baisser ou lever chaque barrière destinée à bloquer un certain paquet dans la zone d'accumulation de façon adaptative à la hauteur détectée de ce paquet.

6. Système selon la revendication 1, **caractérisé en ce que** chaque barrière est munie d'un moyen amortisseur pour amortir le choc provoqué par un contact physique entre un paquet et la barrière.

7. Système selon la revendication 6, **caractérisé en ce que** ledit moyen amortisseur est une garniture en un matériau amortisseur à faible coefficient de frottement.

## Patentansprüche

1. Sortier-/Handhabungssystem für Packstücke oder Pakete (P); umfassend:
- einen Primärförderer (1), der in der Lage ist, Pakete gemäß einer geschlossenen Bahn zu fördern,
- wenigstens einen Sekundärförderer (2), der von dem Primärförderer mit Paketen versorgt wird, wobei der Sekundärförderer ein Plattenförderer ist, der in der Lage ist, die auf den Platten platzierten Pakete in Richtung von Sortierausgängen zu verlagern, wobei der Sekundärförderer eine kleinere Förderrate als diejenige des Primärförderers aufweist und asynchron zu dem Primärförderer ist,
- eine Übergabeeinheit (3) von Paketen zwischen dem Primärförderer und dem Sekundärförderer, umfassend wenigstens einen Einlauf (4A, 4B), in den die von dem Primärförderer herangeführten Pakete durch Schwerkraft fallen, um ausgangsseitig auf wenigstens einer Spur (5A, 5B) einer Sammelzone in Empfang genommen zu werden, die sich gemäß einer Längsrichtung entlang des Sekundärförderers erstreckt, wobei bewegliche Barrieren (6) auf der wenigstens einen Spur der Sammelzone stromaufwärts von mechanischen Elementen in einer Ausrichtezone, welche die Pakete mit einer konstanten Rate auf einer Referenzspur serialisieren und jedes dieser quer zu der Längsrichtung auf eine freie Platte des Sekundärförderers verschieben, angeordnet sind,
- und eine Regel-/Steuereinheit (12), die in der Lage ist, die beweglichen Barrieren abzusenken, um die von dem wenigstens einen Einlauf herabkommenden Pakete zeitweise in der Sammelzone zu sammeln, und die beweglichen Barrieren anzuheben, um gemäß einer vorbestimmten Sequenz diese Pakete von der Sammelzone freizugeben, und die mechanischen Elemente derart zu steuern, dass die Übergabe der Pakete ausgerichtet auf der Referenzspur auf den freien Platten des Sekundärförderers mit einem Paket je Platte erfolgt.

2. System nach Anspruch 1, **dadurch gekennzeichnet, dass** die Sammelzone mit Barrieren wenigstens zwei jeweils wenigstens zwei parallelen Spuren (5A, 5B) zugeordnete Einläufe (4A, 4B) und auf jeder Spur eine Reihe von beweglichen Barrieren zum Blockieren einer Serie von jeweils einzeln durch eine bewegliche Barriere getrennten Paketen umfasst.

3. System nach Anspruch 1, **dadurch gekennzeichnet, dass** die Platten des Sekundärförderers einer geschlossenen Bahn folgen, und dass am Ende der Übergabevorrichtung ein Behälter (11) vorgesehen ist, um die Pakete, die nicht auf eine freie Platte des Sekundärförderers übergeben werden konnten, zu rekuperieren.

4. System nach Anspruch 1, **dadurch gekennzeichnet, dass** die Sammelzone und die Ausrichtezone aus einem einzigen Kugelförderer bestehen, unter dem zwei motorisierte Bänder angeordnet sind, die sich der eine quer zu dem anderen verlagern.

5. System nach Anspruch 1, **dadurch gekennzeichnet, dass** Höhensensoren (ME) vorgesehen sind, um die Höhe jedes ankommenden Pakets in der Sammelzone zu erfassen und ein entsprechendes Signal der Einheit (12) zu liefern, und dass die Einheit derart ausgebildet ist, dass jede ein bestimmtes Paket in der Sammelzone zu blockieren bestimmte Barriere auf adaptive Weise in Bezug auf die erfasste Höhe des Pakets abgesenkt oder angehoben wird.

6. System nach Anspruch 1, **dadurch gekennzeichnet, dass** jede Barriere mit einem Dämpfmittel versehen ist, um den Aufprall zu dämpfen, der durch einen physischen Kontakt zwischen einem Paket und der Barriere ausgelöst wird.

7. System nach Anspruch 6, **dadurch gekennzeichnet, dass** das Dämpfmittel eine Garnitur aus einem Dämpfmaterial mit geringem Reibungskoeffizienten ist.

## Claims

1. A sorting/handling system for sorting/handling parcels or packets (P), comprising:
- a primary conveyor (1) suitable for conveying packets in series around a looped path;
- at least one secondary conveyor (2) fed with packets by the primary conveyor, the secondary conveyor being a platform conveyor suitable for moving the packets placed on the platforms towards sorting outlets, said secondary conveyor having a throughput rate lower than that of the primary conveyor and being asynchronous with the primary conveyor;
- a transfer unit (3) for transferring the packets from the primary conveyor to the secondary conveyor, which transfer unit comprises at least one chute (4A, 4B) into which the packets brought by the primary conveyor fall by gravity so as to be received at the outlet (s) of the chute (s) on at least one channel (5A, 5B) of an accumulation zone that extends in a longitudinal direction along the secondary conveyor, movable barriers (6) being disposed over the at least one channel of the accumulation zone upstream from mechanical elements in an alignment zone that put the packets into series at a constant pitch on a reference channel and that push them transversely to said longitudinal direction; and
- a monitoring and control unit (12) suitable for lowering the movable barriers to allow packets coming down the at least one chute to accumulate temporarily in the accumulation zone and for raising the movable barriers for releasing the packets from the accumulation zone in a certain sequence, and for controlling the mechanical elements in such a manner as to transfer the packets in alignment on the reference channel to free platforms of the secondary conveyor at a rate of one packet per platform.

2. A system according to claim 1, **characterized in that** said accumulation zone having barriers comprises at least two chutes (4A, 4B) associated with respective ones of at least two parallel channels (5A, 5B), and, on each channel, one or more rows of movable barriers for blocking a series of packets that are separated from each other by a movable barrier.

3. A system according to claim 1, **characterized in that** the platforms of said secondary conveyor follow a looped path, and **in that**, at the end of the transfer device, a container (11) is provided for recovering the packets that it has not been possible to transfer to free platforms of the secondary conveyor.

4. A system according to claim 1, **characterized in that** said accumulation zone and said alignment zone are constituted by a common, single ball conveyor under which two motor-driven belts are disposed that move perpendicularly relative to each other.

5. A system according to claim 1, **characterized in that** level detectors (ME) are provided to detect the height of each packet arriving in the accumulation zone and to deliver a corresponding signal to said unit (12), and **in that** said unit is arranged in such a manner as to lower or to raise each barrier serving to block a certain packet in the accumulation zone in such a manner as to adapt to the detected height of the packet.

6. A system according to claim 1, **characterized in that** each barrier is provided with damping means for damping the shock or impact caused by physical contact between a packet and the barrier.

7. A system according to claim 6, **characterized in that** said damping means are constituted by padding made of a damping material having a low coefficient of friction.
